# EUROPEAN PATENT SPECIFICATION

(11) **EP 3 120 968 B1**
(45) Date of publication and mention of the grant of the patent: **21.11.2018**
(21) Application number: 16180372.1
(22) Date of filing: 20.07.2016
(51) Int. Cl.: B23P 6/00, B33Y 10/00, C23C 24/04, B64C 25/44, B64C 25/36, B60T 8/17, F01D 5/00, B64F 5/00, B22F 3/105

(54) **METHODS FOR REPAIR OF AIRCRAFT WHEEL AND BRAKE PARTS**
VERFAHREN ZUR REPARATUR EINES FLUGZEUGRADS UND VON BREMSENTEILEN
PROCÉDÉS DE RÉPARATION DE PARTIES DE ROUE D'AVION ET PARTIES DE FREIN D'AVION

(30) Priority: 20.07.2015 US 201514804074
(43) Date of publication of application: 25.01.2017
(73) Proprietor: Goodrich Corporation, Charlotte, NC 28217-4578 (US)
(72) Inventor: HERRMANN, Nathaniel John, Springfield, OH Ohio 45502 (US)
(74) Representative: Dehns

(56) References cited:
- EP-A1- 2 778 256
- EP-A1- 2 873 620
- EP-A2- 1 674 595
- WO-A1-2013/184401
- WO-A1-2015/069588
- US-A- 5 638 591
- US-A1- 2002 020 734
- US-A1- 2006 045 785
- US-A1- 2013 209 826

## Description

### FIELD

The present disclosure relates generally to the field of materials technology, and more specifically to systems and methods for aircraft wheel and brake components repair.

### BACKGROUND

Conventional aircraft wheel and brake assemblies comprise rotating and stationary disks which stop the aircraft in response to being compressed together. Wheel and brake assemblies may experience substantial loading and stress during operation. Thus, the structural integrity of wheel and brake components is important for successful operation. Furthermore, aircraft wheels may comprise two halves which may comprise mating surfaces that, when coupled together, benefit from precise alignment and sealing. Aircraft wheels may provide a sealing surface which, along with a tire, may define a void which houses a compressed gas such as nitrogen and/or air. Thus, the sealing action of the wheel and tire assembly is important to acceptable operation. Furthermore, aircraft wheels may include bearing bore surfaces as well as various other surfaces which may experience wear or corrosion over time. Thus, after extended use of aircraft wheel and brake assemblies, repair may be needed from time to time. US2013/0209826A1 describes a method of repairing components having damaged internally threaded openings. US 2001/020734 A1 describes a method of repairing metallic components. WO 2013/184401 A1 describes a method of working an airfoil using elevated temperature CMT welding. EP 2873620 A1 describes a repair method for fuselage components of an aircraft or spacecraft. US 2006/045785 A1 describes a method for repairing titanium alloy components. EP 1674595 A2 describes structural repair using cold sprayed aluminum material. EP 2778256 A1 describes methods utilizing cold spray techniques for repairing and protecting rotary components or aviation propulsion systems. US5638591A describes a method for restoring a wheel beadseat. WO2015/069588A1 describes a method of superalloy material deposition with interlayer material removal.

### SUMMARY

According to the invention, a method for repairing a bore of at least one of an aircraft wheel and an aircraft brake part is provided in claim 1. Further embodiments and details of this method are presented in the dependent claims. These features and elements as well as the operation of the disclosed embodiments will become more apparent in light of the following description and accompanying drawings.

### BRIEF DESCRIPTION OF THE DRAWINGS

Various embodiments are particularly pointed out and distinctly claimed in the concluding portion of the specification. Below is a summary of the drawing figures, wherein like numerals denote like elements and wherein:
FIG. 1 illustrates an aircraft having landing gear, in accordance with various embodiments;
FIG. 2 illustrates a perspective view of an aircraft wheel, in accordance with various embodiments;
FIG. 3 illustrates a cross-section view of an aircraft wheel, in accordance with various embodiments;
FIG. 4 illustrates an additive manufacturing repair process of a threaded portion of an aircraft wheel, in accordance with various embodiments;
FIG. 5 illustrates an additive manufacturing repair process of a bored portion of an aircraft wheel, in accordance with the present invention;
FIG. 6 illustrates an additive manufacturing repair process of an aircraft wheel flange, in accordance with various embodiments;
FIG. 7 illustrates an additive manufacturing repair process of a mating surface of an aircraft wheel, in accordance with various embodiments;
FIG. 8A illustrates a method for repairing a bore of an aircraft wheel and brake part, in accordance with the present invention;
FIG. 8B illustrates a method for repairing a bore of an aircraft wheel and brake part, in accordance with various embodiments; and
FIG. 9 illustrates a method for repairing a damaged portion of an aircraft wheel and brake part, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the disclosure. Thus, the detailed description herein is presented for purposes of illustration only and not of limitation. For example, the steps recited in any of the method or process descriptions may be executed in any order and are not necessarily limited to the order presented. Moreover, many of the functions or steps may be outsourced to or performed by one or more third parties. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

For example, in the context of the present disclosure, methods may find particular use in connection with aircraft wheel and brake systems. However, various aspects of the disclosed embodiments may be adapted for optimized performance with a variety of components and in a variety of systems. As such, numerous applications of the present disclosure may be realized.

As used herein, the term "additive manufacturing" encompasses any method or process whereby a three-dimensional object is produced by creation of a substrate or addition of material to an object, such as by addition of successive layers of a material to an object to produce a manufactured product having an increased mass or bulk at the end of the additive manufacturing process than the beginning of the process. In contrast, traditional manufacturing (e.g., forms of subtractive manufacturing) by machining or tooling typically relies on material removal or subtractive processes, such as cutting, lathing, drilling, grinding, and/or the like, to produce a final manufactured object that has a decreased mass or bulk relative to the starting workpiece. As used herein, the term "additive manufacturing" should not be construed to encompass fabrication or joining of previously formed objects.

A variety of additive manufacturing technologies are commercially available. Such technologies include, for example, fused deposition modeling, polyjet 3D printing, electron beam freeform fabrication, direct metal laser sintering, electron-beam melting, selective laser melting, selective heat sintering, selective laser sintering, stereolithography, multiphoton photopolymerization, digital light processing, and cold spray. These technologies may use a variety of materials as substrates for an additive manufacturing process, including various plastics and polymers, metals and metal alloys, ceramic materials, metal clays, organic materials, and the like. Any method of additive manufacturing and associated compatible materials, whether presently available or yet to be developed, is intended to be included within the scope of the present disclosure. As used herein, the term "additive manufacturing" and "additive repair" may be used interchangeably.

Systems and methods disclosed herein may be useful for wheel and braking systems for use in aircraft. Aircraft may comprise one or more types of aircraft wheel and brake assemblies. For example, an aircraft wheel and brake assembly may comprise a wheel mounted to a non-rotatable wheel support for rotation, and a brake disk stack. The brake stack may have front and rear axial ends and alternating rotor and stator disks mounted with respect to the wheel support and wheel for relative axial movement. Each rotor disk may be coupled to the wheel for rotation therewith and each stator disk is coupled to the wheel support, preventing rotation. A torque plate may be located at the rear end of the disk pack and a piston housing may be located at the front end. The piston housing may house one or more pistons that extend to compress the brake disk stack against the torque plate, or the brake disk stack may be compressed by other means. Torque is taken out by the stator disks through a static torque plate or the like. More specifically, the stators may be coupled to a torque plate via notches on the stator inner diameter (ID) which accept splines on the torque plate barrel outer diameter (OD). The torque plate may transfer a load to the piston housing which is coupled to the aircraft landing gear. Thus, a load path may exist from the ground, through a tire, to the wheel, to the rotors, to the stators, to the torque plate, through the piston housing, and into the landing gear. Accordingly, any part included in a wheel and brake assembly may be referred to herein as a "wheel and brake part".

Methods for wheel and brake component repair are described herein. As used herein, "damage" may refer to corrosion, cracks, dents, bends and otherwise deformed areas. Other types of damage are possible. Various components may incur damage that may benefit from repair to restore one or more of geometric and structural properties. Generally, a thermal spray technique may be used to restore the geometry of a component. However, thermal spray techniques may not restore structural properties of a component. Thermal spray may cause the loss of various mechanical properties of a material. A cold spray process or other additive manufacturing method currently developed or developed in the future may be used to restore geometric and/or structural properties of a component. In various embodiments, structural properties may include fatigue life, strength, toughness, ductility, weldability, and/or durability. In various embodiments, structural properties may include yield strength, ultimate strength, Young's modulus, and/or Poisson's ratio.

A cold spray process and/or other additive repair process may be one where solid powders, generally from about 1 to about 100 microns in diameter (wherein the term about in this context only means +/- 0.9 microns), are accelerated in a supersonic gas jet to velocities up to one thousand meters per second (1,000 m/s) or (3,281 fps). In various embodiments, a cold spray process and/or other additive repair process may be one where solid powders are accelerated in a gas jet, such as a helium and/or nitrogen gas jet for example, at velocities in the range from about 300 m/s (980 fps) to about 1200 m/s (3940 fps) (wherein the term about in this context only means +/- 50 m/s). During impact or collision with a substrate, the powder may undergo plastic deformation and adhere to the surface. Unlike thermal spraying techniques, e.g., plasma spraying, arc spraying, flame spraying, high velocity oxygen fuel (HVOF), etc., the solid powders are not melted during the cold spray process. Accordingly, the solid powders may retain the same physical state during an additive manufacturing process in which the powder does not melt. For example, a powder may retain its physical state as a solid during an additive manufacturing process. In various embodiments, a cold spray process and/or other additive repair process may be performed at temperatures in a range from about 0 C (32 F) to about 1000 C (1832 F) (wherein the term about in this context only means +/- 20 C). In various embodiments, properties such as particle size, particle density, porosity, hardness, and temperature of the solid powders may be tuned to achieve a desired coating. Powder used in a cold spray process and/or other additive repair process may comprise a density from about 1 to about 10 grams per cubic centimeter (g/cc) (wherein the term about in this context only means +/- 0.9 g/cc). However, as used herein, the cold spray process and/or other additive repair process may be one which uses solid powder comprising any particle density.

In various embodiments, the powder used in an additive repair process may comprise various particles comprising various diameters. Stated another way, a powder may comprise particles comprising a given distribution of diameters. For example, a powder may comprise particles, wherein 80% of the particles are within a threshold value, 35 ± 5 microns for example, and the remaining 20% of the particles are outside of the threshold value. In various embodiments, it may be useful to control particle sizing of a powder used in an additive repair process.

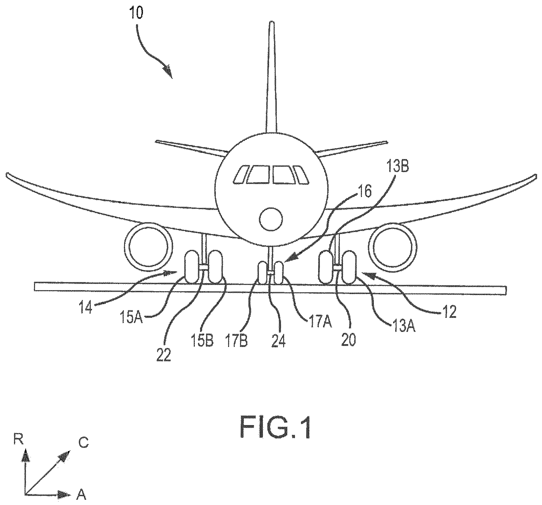

With reference to FIG. 1, an aircraft 10 in accordance with various embodiments may include landing gear such as landing gear 12, landing gear 14 and landing gear 16. Landing gear 12, landing gear 14 and landing gear 16 may generally support aircraft 10 when aircraft is not flying, allowing aircraft 10 to taxi, take off and land without damage. Landing gear 12 may include wheel 13A and wheel 13B coupled by an axle 20. Landing gear 14 may include wheel 15A and wheel 15B coupled by an axle 22. Landing gear 16 may include nose wheel 17A and nose wheel 17B coupled by an axle 24. The nose wheels differ from the main wheels in that the nose wheels may not include a brake and/or a wheel speed transducer. An A-R-C axis is used throughout the drawings to illustrate the axial (A), radial (R) and circumferential (C) directions relative to wheel 15A.

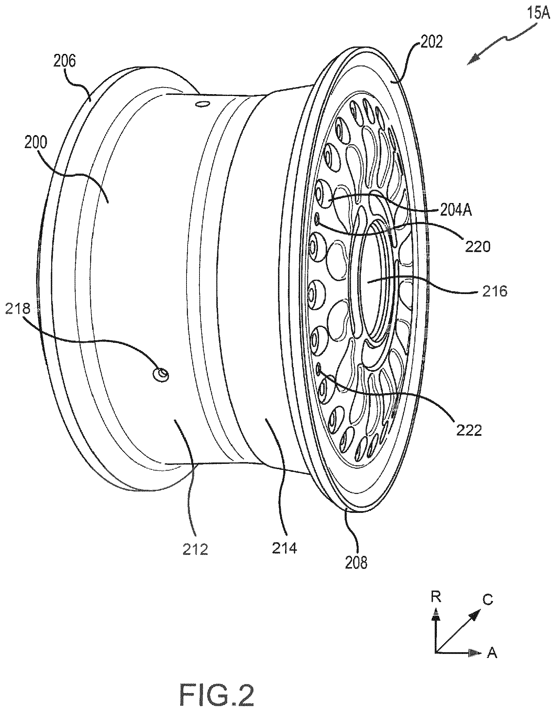

With reference now to FIG. 2, wheel 15A in accordance with various embodiments includes an inner wheel half 200 and an outer wheel half 202. Outer wheel half 202 defines a plurality of outer bolt apertures including outer bolt aperture 204A which is designed to receive bolts.

Inner wheel half 200 includes a first outer surface 212 that defines a first flange 206 at an outer axial end of inner wheel half 200. Similarly, outer wheel half 202 includes a second outer surface 214 that defines a second flange 208 on an outer axial end of outer wheel half 202. Outer wheel half 202 includes a bearing bore 216 which may house at least one bearing system.

In various embodiments, inner wheel half 200 may include one or more fuse plug holes such as fuse plug hole 218. In various embodiments, fuse plug hole 218 may house a fusable thermal relief plug which may be configured to release air pressure when wheel 15A reaches high temperatures. In various embodiments, fuse plug hole 218 may comprise a bore, wherein a fusable thermal relief plug may be retained by the interface between the side wall of the fuse plug hole 218 and at least one of an o-ring and the sidewall of the fusable thermal relief plug. In various embodiments, fuse plug hole 218 may comprise a threaded portion, wherein at least a portion of a fusable thermal relief plug is configured to threadingly engage with the fuse plug hole. In various embodiments, fuse plug hole 218 may be disposed in first outer surface 212. Fuse plug hole 218 may comprise a bore axis extending in a radial direction. However, wheel 15A may comprise a variety of threaded portions located in any of various locations.

In various embodiments, outer wheel half 202 may include threaded portion 220. In various embodiments, threaded portion 220 may be disposed in outer wheel half 202. In various embodiments, threaded portion 220 may be located adjacent to an outer bolt aperture such as outer bolt aperture 204A. In various embodiments, threaded portion 220 may comprise a bore with threads cut into the surface of the bore. In various embodiments, threaded portion 220 may comprise a tire pressure indicator system (TPIS) plug port, over-inflation plug port, inflation valve port, and/or the like.

In various embodiments, outer wheel half 202 may include bored portion 222. In various embodiments, bored portion 222 may be disposed in outer wheel half 202. In various embodiments, bored portion 222 may be located adjacent to an outer bolt aperture. In various embodiments, bored portion 222 may comprise a bore. In various embodiments, bored portion 222 may comprise a tire pressure indicator system (TPIS) plug port, over-inflation plug port, inflation valve port, and/or the like.

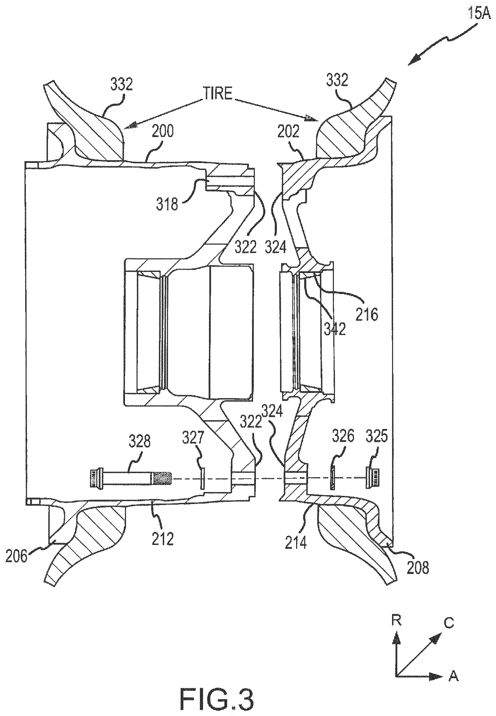

With reference to FIG. 3, in accordance with various embodiments, inner surface 322 of inner wheel half 200 is positioned adjacent to a mating surface 324 of outer wheel half 202. In various embodiments, wheel 15A may comprise forged aluminum. Tire 332 may be located at least partially radially outward of wheel 15A. Wheel 15A may include one or more threaded portions such as a tire pressure indicator system (TPIS) plug port, over-inflation plug port, inflation valve port, and/or the like.

In various embodiments, wheel 15A may include one or more bored portions such as bearing bore 216 for example. Bearing bore 216 may house one or more outer races such as outer race 342. Outer race 342 may be pressed tightly into bearing bore 216. Outer race 342 may retain an inner race and rollers (or bearings). Outer race 342, along with the inner race and rollers may comprise a bearing assembly. Outer race 342 may experience substantial loading. Over time, outer race 342 may spin within bearing bore 216 and wear the surface of bearing bore 216 of wheel 15A. Thus, the diameter of bearing bore 216 may increase over time. Similarly, the inner surface of torque bar hole 318 may wear over time. Thus, it may benefit from occasional repair to the inner surface of torque bar hole 318 and the inner surface of bearing bore 216.

In various embodiments, inner surface 322 of inner wheel half 200 may be compressed against mating surface 324 of outer wheel half 202. Over time, a portion of inner surface 322 and/or mating surface 324 may experience corrosion leaving holes (or pits) in the surface of inner surface 322 and/or mating surface 324. Thus, it may be necessary to occasionally repair the surface of various mating surfaces of wheel 15A.

In various embodiments, a plurality of nuts and bolts, such as bolt 328 and nut 325, may be used to couple inner wheel half 200 and outer wheel half 202. In various embodiments, a washer, such as washer 327, may be compressed between bolt 328 and inner wheel half 200. In various embodiments, a washer, such as washer 326, may be compressed between nut 325 and outer wheel half 202. In various embodiments, a surface, adjacent to bolt 328, of inner wheel half 200, and/or outer wheel half 202 may experience corrosion which may form holes (or pits) in a surface of inner wheel half 200 and/or outer wheel half 202.

In various embodiments, various portions of wheel 15A may experience damage during operation or maintenance. A rock or debris may strike against a surface of wheel 15A, causing damage. A screw driver or tool may cause damage if an operator pries against wheel 15A during maintenance.

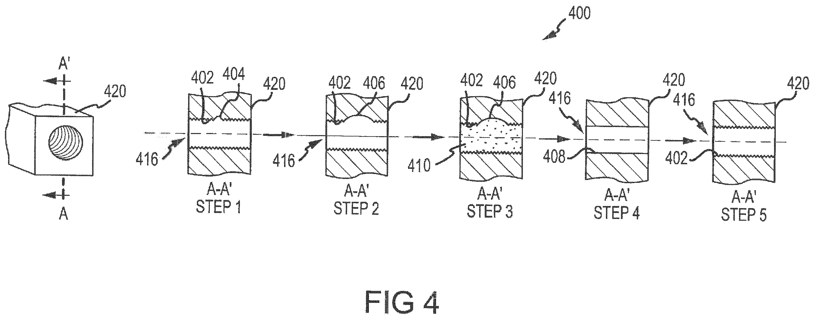

With reference to FIG. 4, various steps of an additive manufacturing repair process are illustrated, in accordance with various embodiments. In various embodiments, powder 410 may comprise a diameter in the range from about 1 to about 100 microns (wherein the term about in this context only means +/- 0.9 microns), and in various embodiments, powder 410 may comprise a diameter in the range from about 1 to about 50 microns (wherein the term about in this context only means +/- 0.9 microns). Powder 410 may comprise at least one of aluminum, aluminum oxide, nickel alloy, copper, titanium, and stainless steel. Powder 410 may comprise a material having similar chemical properties as threaded portion 410. Threaded portion 420 may comprise aluminum.

In various embodiments, with momentary reference to FIG. 2, threaded portion 420 may be identical to threaded portion 220 and/or fuse plug hole 218. However, threaded portion 420 may comprise any portion of wheel 15A which includes a threaded bore. In various embodiments, threaded portion 420 may include bore 416, threads 402, and damaged portion 404. In various embodiments, a method 400 for repairing a bore 416 of an aircraft wheel or brake part is illustrated in FIG. 4. Step 1 may include identifying the damaged portion 404 of bore 416. In various embodiments, at least a portion of damaged portion 404 may be pre-treated. In various embodiments, step 2 may include pre-treating at least a portion of a surface of bore 416, including damaged portion 404. Pre-treatment may include chemically cleaning, sanding, grinding, drilling or the like. It may be beneficial to pre-treat damaged portion 404 to provide a clean surface 406 for added material to adhere to. Step 3 illustrates threaded portion 420 having been filled via an exemplary additive manufacturing process with powder 410. At least a portion of threaded portion 420 may be filled with powder 410, for example, during the additive manufacturing process. Step 4 illustrates threaded portion 420 after having been bored or drilled to a specified diameter. After the additive manufacturing process, bore 416 may be drilled or bored to a specified diameter. Step 4 may be referred to as post-treatment. Step 5 illustrates the threaded portion after having cut threads 402 into the inner surface 408 of bore 416. Accordingly, the original geometry of threaded portion 420 in step 1 is restored in step 5 without the damaged portion 404. Step 5 may be referred to as post-treatment. The additive manufacturing process may restore at least one of geometrical properties and structural properties to threaded portion 420.

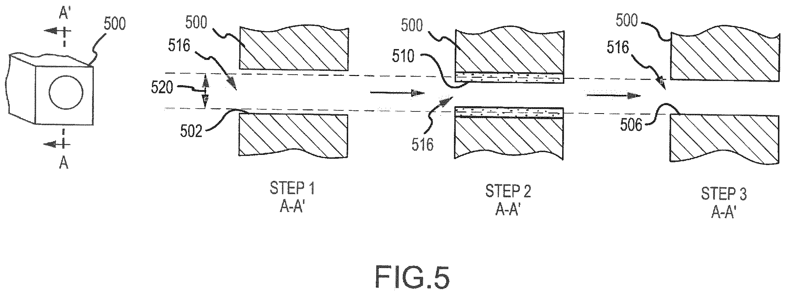

With reference to FIG. 5, a method of repairing a bored portion 500 of an aircraft wheel or brake part is illustrated, in accordance with the present invention. In various embodiments, with momentary reference to FIG. 3, bored portion 500 may be identical to torque bar hole 318, bored portion 222, and/or bearing bore 216. However, bored portion 500 may be identical to any portion of an aircraft wheel or brake which defines a bored portion. Step 1 of repairing a bored portion 500 may include establishing a pre-determined diameter 520 of bore 516. The surface 502 of bore 516 may be determined to be damaged if the diameter of bore 516 is not equal to pre-determined diameter 520. Thus bore 516 may comprise a damaged portion. In various embodiments, the surface 502 of bore 516 may be pre-treated. Pre-treatment may include chemically cleaning, sanding, grinding, drilling or the like. Pre-treatment of bore 516 may be useful to provide a clean surface to which added material may adhere. Step 2 may include performing an additive manufacturing process to bore 516 until the diameter of bore 516 is less than the pre-determined diameter 520. In other words, powder 510, for example, may be sprayed onto bore 516 such that powder 510 (or bore 516) comprises a diameter which is less than pre-determined diameter 520. At least a portion of bore 516 may be filled with powder 510, for example, during the additive manufacturing process. Step 3 illustrates bored portion 500 after having been bored or drilled to the pre-determined diameter 520. After the additive manufacturing process, bore 516 may be drilled or bored to pre-determined diameter 520. Step 3 may be referred to as post-treatment. The additive manufacturing process may restore at least one of geometrical properties and/or structural properties to bored portion 500. In various embodiments, pre-determined diameter 520 may also be referred to herein as an original geometric profile.

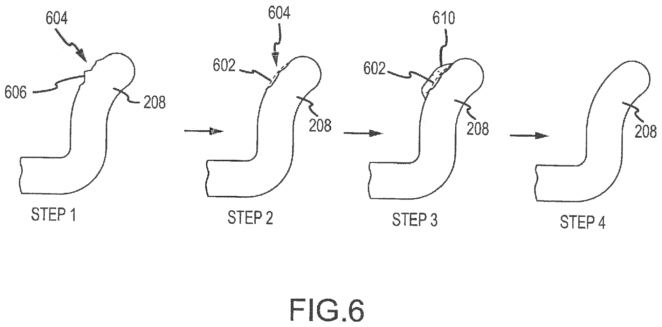

With reference to FIG. 6, a method of repairing an outer surface of an aircraft wheel or brake part is illustrated, in accordance with various embodiments. Second flange 208 is illustrated with a damaged portion 604. Step 1 may comprise identifying a damaged portion 604 of an aircraft wheel and brake part, such as second flange 208 for example, Damaged portion 604 may cause air to leak from between second flange 208 and an adjacent tire, according to various embodiments. In various embodiments, damaged portion 604 may include a raised portion 606 which may extend from the original geometric profile 602 of second flange 208. Step two illustrates second flange 208 after having been pre-treated. In various embodiments, a surface of second flange 208 may be pre-treated. Pre-treatment may include chemically cleaning, sanding, grinding, drilling or the like. Pre-treating second flange 208 may provide a clean surface for which added material may adhere. Accordingly, raised portion 606 may be removed during pre-treatment. Step 3 illustrates second flange 208 after having undergone an additive manufacturing process. In various embodiments, powder 610, comprising similar chemical properties as second flange 208, may be sprayed onto and adhered to second flange 208. In various embodiments, second flange 208 may comprise aluminum, for example. Thus, powder 610, for example, may comprise aluminum and aluminum oxide (alumina) which may be sprayed onto and adhered to second flange 208 using an additive manufacturing process. This process may continue until powder 610 has filled at least the original geometric profile 602 of second flange 208. Step 4 illustrates second flange 208 after having performed post-treatment to second flange 208. Post-treatment may include removing excess material from second flange 208 until the original geometry of second flange 208 is restored. Post-treatment may include, grinding, sanding, milling, drilling, boring, or the like. The additive manufacturing process may restore at least one of geometrical properties and/or structural properties to second flange 208.

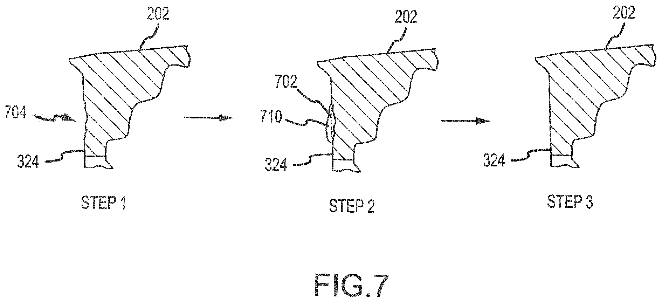

With reference to FIG. 7, a method of repairing a flat surface, such as a mating surface for example, of an aircraft wheel or brake part is illustrated, in accordance with various embodiments. Mating surface 324 of outer wheel half 202 is illustrated with a damaged portion 704. Step 1 may include identifying the damaged portion 704 of mating surface 324. Step 1 may include pre-treatment as described herein. Mating surface 324 may be pre-treated. Pre-treatment may include chemically cleaning, sanding, grinding, drilling or the like. Pre-treatment of mating surface 324 may provide a clean surface for which added material may adhere. Step 2 illustrates mating surface 324 after having undergone an additive manufacturing process. Powder 710, for example, comprising similar chemical properties as mating surface 324, may be sprayed onto and adhered to mating surface 324. In various embodiments, outer wheel half 202 may comprise aluminum. Thus, powder 710, for example, may comprise aluminum and aluminum oxide (alumina) which may be sprayed onto and adhered to outer wheel half 202 using an additive manufacturing process. This process may continue until powder 710 has at least filled the original geometric profile 702 of mating surface 324. Step 3 illustrates mating surface 324 after having performed post-treatment to mating surface 324. Post-treatment may include removing excess material from mating surface 324 until the original geometry of mating surface 324 is restored. Post-treatment may include, grinding, sanding, milling, drilling, boring, or the like. The additive manufacturing process may restore at least one of geometrical properties and/or structural properties to mating surface 324. Accordingly, mating surface 324 may be restored to a similar state as it was directly after original manufacture.

In various embodiments, any of the methods of repairing an aircraft wheel or brake part as described in FIG. 5 through FIG. 7 may be used to repair a surface of a torque plate or a piston housing.

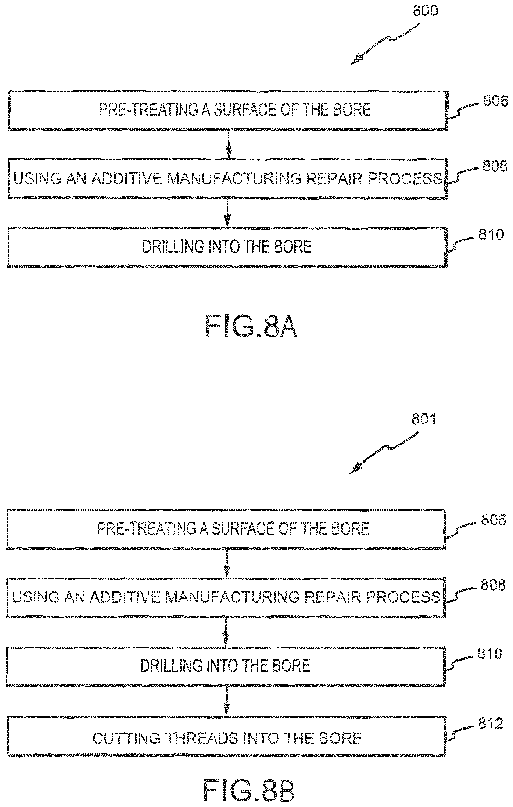

With reference to FIG. 8A, a method 800 for repairing a bore of an aircraft wheel and brake part is illustrated, in accordance with the present invention. The method 800 may include pre-treating a surface of the bore, in step 806. Step 808 may include using an additive manufacturing repair process. Step 810 may include drilling into the bore. With continued reference to FIG. 8A and with further reference to FIG. 4 and FIG. 5, a damaged portion 404 of bore 416 may be identified in step 1. Step 806 may include pre-treating a surface of the bore 516. Bore 516 may comprise a pre-determined diameter 520. In various embodiments, step 808 may include, for example, cold spraying powder 510 onto the surface of bore 516 until the bore comprises a diameter which is less than the pre-determined diameter 520, wherein the powder retains the same physical state. In various embodiments, step 808 may include, for example, spraying powder 510 onto the surface of bore 516 until the bore comprises a diameter which is less than the pre-determined diameter 520. In various embodiments, step 808 may include any additive manufacturing repair process such as fused deposition modeling, polyjet 3D printing, electron beam freeform fabrication, direct metal laser sintering, electron-beam melting, selective laser melting, selective heat sintering, selective laser sintering, stereolithography, multiphoton photopolymerization, digital light processing, cold spray, and/or the like. For example, a repair material may be applied to the surface of bore 516 until the bore comprises a diameter which is less than the pre-determined diameter 520, according to various types of additive manufacturing processes. Step 810 may include drilling into bore 516 until bore 516 comprises the pre-determined diameter 520. Pre-treatment may include chemically cleaning, sanding, grinding, drilling or the like.

With reference to FIG. 8B, a method 801 for repairing a bore of an aircraft wheel and brake part is illustrated, in accordance with various embodiments. In various embodiments, method 801 may be similar to method 800 of FIG. 8A. Step 806 may include pre-treating a surface of the bore. Step 808 may include using an additive manufacturing repair process. Step 810 may include drilling into the bore. Step 812 may include cutting threads into the bore. With continued reference to FIG. 8B and with further reference to FIG. 4 and FIG. 5, step 806 may include pre-treating a surface of the bore 516. Bore 516 may comprise a pre-determined diameter 520. In various embodiments, step 808 may include, for example, cold spraying powder 510 onto the surface of bore 516 until the bore comprises a diameter which is less than the pre-determined diameter 520, wherein the powder retains the same physical state. In various embodiments, step 808 may include, for example, spraying powder 510 onto the surface of bore 516 until the bore comprises a diameter which is less than the pre-determined diameter 520. In various embodiments, step 808 may include any additive manufacturing repair process. For example, a repair material may be applied to the surface of bore 516 until the bore comprises a diameter which is less than the pre-determined diameter 520, according to various types of additive manufacturing processes. Step 810 may include drilling into bore 516 until bore 516 comprises the pre-determined diameter 520. Pre-treatment may include chemically cleaning, sanding, grinding, drilling or the like. Step 812 may include cutting threads 402 into the inner surface 408 of bore 416.

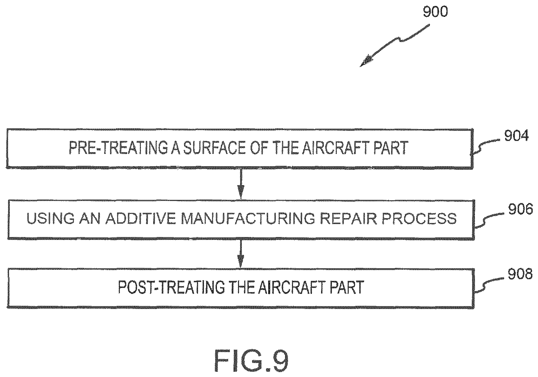

With reference to FIG. 9, a method 900 for repairing a damaged portion of an aircraft wheel and brake part is illustrated according to various embodiments. The method 900 may include pre-treating a surface of the aircraft part in step 904. Step 906 may include using an additive manufacturing repair process. Step 908 may include post-treating the aircraft part. With continued reference to FIG. 9 and with further reference to FIG. 6, a damaged portion 604 of an aircraft part such as, for example, second flange 208 may be identified. Step 904 may include pre-treating a surface, such as damaged portion 604 of the aircraft part. In various embodiments, step 906 may include spraying powder 610, for example, onto the damaged portion 604 of the aircraft part until the powder 610 has at least filled an original geometric profile 602 of the aircraft part, wherein the powder 610 retains the same physical state. In various embodiments, step 906 may include any additive manufacturing repair process. Step 908 may include post-treating the aircraft part. Pre-treatment may include chemically cleaning, sanding, grinding, drilling or the like. Post-treatment may include removing excess repair material from an aircraft part, such as second flange 208, until the original geometric profile 602 of second flange 208 (the aircraft part) is restored.

In various embodiments, a method for restoring structural properties of an aircraft wheel and brake part may be similar to the process as described in FIG. 8A and 8B and similar to the process as described in FIG. 9.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A method (800, 801) for repairing a bore of at least one of an aircraft wheel and an aircraft brake part comprising:
pre-treating a surface of the bore (806), the bore (416, 516) comprising a diameter greater than a pre-determined diameter;
using an additive manufacturing method to apply repair material (410, 510) to the surface of the bore (416, 516); and
drilling into the bore (810) until the bore (416, 516) comprises the pre-determined diameter (520), wherein the repair material (410, 510) comprises particles with a diameter in a range from about 1 to about 100 microns, and further wherein the using the additive manufacturing method comprises spraying the repair material onto the at least one of the aircraft wheel and the aircraft brake part at supersonic speeds, the repair material colliding with the at least one of the aircraft wheel and the aircraft brake part and plastically deforming such that the repair material adheres to a surface of the at least one of the aircraft wheel and the aircraft brake part, wherein the repair material retains its physical state, and further wherein the bore comprises a through-hole that is maintained during the additive manufacturing method, **characterized in that** the bore extends through the at least one of the aircraft wheel and the aircraft brake part, the bore comprising an axis, and the surface being substantially parallel with respect to the axis.

2. The method (801) of claim 1, further comprising cutting threads (402) into the bore (416, 812).

3. The method of any preceding claim, wherein the at least one of the aircraft wheel and the aircraft brake part comprises aluminum and the repair material (410, 510, 610) comprises at least one of aluminum, aluminum oxide, nickel alloy, copper, titanium, and stainless steel.

4. The method of any preceding claim, wherein the using the additive manufacturing repair process is configured to restore at least one of geometrical properties and structural properties to the at least one of the aircraft wheel and the aircraft brake part.

## Patentansprüche

1. Verfahren (800, 801) zur Reparatur einer Bohrung von zumindest entweder einem Flugzeugrad oder einem Flugzeugbremsenteil, umfassend:
Vorbehandeln einer Fläche der Bohrung (806), wobei die Bohrung (416, 516) einen Durchmesser umfasst, der größer als ein vorher festgelegter Durchmesser ist;
Verwenden eines additiven Herstellungsverfahrens zum Auftragen eines Reparaturmaterials (410, 510) auf die Fläche der Bohrung (416, 516); und
Bohren in die Bohrung (810), bis die Bohrung (416, 516) den vorher festgelegten Durchmesser (520) umfasst, wobei das Reparaturmaterial (410, 510) Partikel mit einem Durchmesser in einem Bereich von etwa 1 bis etwa 100 Mikrometern umfasst und wobei außerdem das Verwenden des additiven Herstellungsverfahrens ein Sprühen des Reparaturmaterials zumindest entweder auf das Flugzeugrad oder das Flugzeugbremsenteil mit Überschallgeschwindigkeiten umfasst, wobei das Reparaturmaterial zumindest entweder auf das Flugzeugrad oder auf das Bremsenteil aufprallt und sich plastisch verformt, derart, dass sich das Reparaturmaterial an eine Fläche von zumindest entweder dem Flugzeugrad oder dem Flugzeugbremsenteil anhaftet, wobei das Reparaturmaterial seinen Aggregatszustand beibehält, und wobei außerdem die Bohrung ein durchgehendes Loch umfasst, das während des additiven Herstellungsverfahrens beibehalten wird, **dadurch gekennzeichnet, dass** sich die Bohrung durch zumindest entweder das Flugzeugrad oder das Flugzeugbremsenteil erstreckt, wobei die Bohrung eine Achse umfasst und die Fläche im Wesentlichen parallel zur Achse verläuft.

2. Verfahren (801) nach Anspruch 1, ferner umfassend ein Schneiden eines Gewindes (402) in die Bohrung (416, 812).

3. Verfahren nach einem der vorhergehenden Ansprüche, wobei zumindest entweder das Flugzeugrad oder das Flugzeugbremsenteil Aluminium umfasst und das Reparaturmaterial (410, 510, 610) mindestens eines von Aluminium, Aluminiumoxid, Nickellegierung, Kupfer, Titan und rostfreiem Stahl umfasst.

4. Verfahren nach einem der vorhergehenden Ansprüche, wobei das Verwenden des Reparaturprozesses durch additive Herstellung dazu konfiguriert ist, zumindest entweder geometrische Eigenschaften oder strukturelle Eigenschaften von zumindest entweder dem Flugzeugrad oder dem Flugzeugbremsenteil wiederherzustellen.

## Revendications

1. Procédé (800, 801) pour réparer un alésage d'au moins l'une d'une partie de roue d'avion et d'une partie de frein d'avion, comprenant :
le pré-traitement d'une surface de l'alésage (806), l'alésage (416, 516) comprenant un diamètre supérieur à un diamètre prédéterminé ;
l'utilisation d'un procédé de fabrication supplémentaire pour appliquer un matériau de réparation (410, 510) à la surface de l'alésage (416, 516) ; et
le forage dans l'alésage (810) jusqu'à ce que l'alésage (416, 516) comprenne le diamètre prédéterminé (520), dans lequel le matériau de réparation (410, 510) comprend des particules d'un diamètre d'une plage d'environ 1 à environ 100 micromètres et, en outre, dans lequel l'utilisation du procédé de fabrication supplémentaire comprend la pulvérisation du matériau de réparation sur l'au moins une de la partie de roue d'avion et de la partie de frein d'avion à des vitesses supersoniques, le matériau de réparation heurtant l'au moins une de la partie de roue d'avion et de la partie de frein d'avion et subissant une déformation plastique de sorte que le matériau de réparation adhère à une surface de l'au moins une de la partie de roue d'avion et de la partie de frein d'avion, dans lequel le matériau de réparation conserve son état physique et, en outre, dans lequel l'alésage comprend un trou traversant qui est maintenu au cours de la fabrication supplémentaire, **caractérisé en ce que** l'alésage s'étend à travers l'au moins une de la partie de roue d'avion et de la partie de frein d'avion, l'alésage comprenant un axe et la surface étant sensiblement parallèle par rapport à l'axe.

2. Procédé (801) selon la revendication 1, comprenant en outre la découpe de filets (402) dans l'alésage (416, 812).

3. Procédé selon une quelconque revendication précédente, dans lequel la au moins une de la partie de roue d'avion et de la partie de frein d'avion comprend de l'aluminium et le matériau de réparation (410, 510, 610) comprend au moins l'un parmi l'aluminium, l'oxyde d'aluminium, un alliage de nickel, le cuivre, le titane et l'acier inoxydable.

4. Procédé selon une quelconque revendication précédente, dans lequel l'utilisation du procédé de réparation de fabrication supplémentaire est configuré pour restaurer au moins l'une des propriétés géométriques et des propriétés structurelles sur l'au moins une de la partie de roue d'avion et de la partie de frein d'avion.
